# EUROPÄISCHE PATENTSCHRIFT

(11) **EP 3 791 731 B1**
(45) Veröffentlichungstag und Bekanntmachung des Hinweises auf die Patenterteilung: **08.01.2025**
(21) Anmeldenummer: 20193901.4
(22) Anmeldetag: 01.09.2020
(51) Int. Cl.: A24C 5/32

(54) **FÖRDERTROMMEL DER TABAK VERARBEITENDEN INDUSTRIE**
TRANSPORT DRUM FOR THE TOBACCO PROCESSING INDUSTRY
TAMBOUR DE TRANSPORT DE L'INDUSTRIE DE TRAITEMENT DU TABAC

(30) Priorität: 10.09.2019 DE 102019124198
(43) Veröffentlichungstag der Anmeldung: 17.03.2021
(73) Patentinhaber: Körber Technologies GmbH, 21033 Hamburg (DE)
(72) Erfinder: ZEIPELT, Marcus, 17033 Neubrandenburg (DE)
(74) Vertreter: Seemann & Partner Patentanwälte mbB

(56) Entgegenhaltungen:
- EP-A1- 2 921 062
- EP-A1- 3 384 787
- EP-B1- 2 921 062
- DE-A1- 1 908 199
- DE-B- 1 164 904

## Beschreibung

Die Erfindung betrifft eine Einstoßtrommel der Tabak verarbeitenden Industrie mit Aufnahmemulden für stabförmige Artikel der Tabak verarbeitenden Industrie, insbesondere Filterstäbe und/oder Filterstücke und/oder segmentierte Produkte.

Außerdem betrifft die Erfindung eine Einrichtung zum Überführen von längsaxial geförderten, stabförmigen Artikeln der Tabak verarbeitenden Industrie, insbesondere Filterstäbe und/oder Filterstücke und/oder segmentierte Produkte, von einem die Artikel längsaxial fördernden Längsförderer auf eine die Artikel queraxial abfördernde Querfördereinrichtung sowie eine Maschine der Tabak verarbeitenden Industrie, insbesondere Filterherstellungsmaschine, Zigarettenstrangmaschine oder Filteransetzmaschine.

Unter stabförmigen Artikeln der Tabak verarbeitenden Industrie werden im vorliegenden Zusammenhang im Strangverfahren hergestellte, von einem fortlaufend gebildeten Strang abgetrennte Artikel wie Zigaretten, Zigarillos, Filterstäbe und dergleichen verstanden.

Bei Strangmaschinen der Tabak verarbeitenden Industrie, wie Zigarettenstrangmaschinen oder Filterstrangmaschinen, werden die vom Strang abgetrennten Strangabschnitte aus ihrer längsaxialen Produktionsförderbahn in eine queraxiale Förderbahn für die Weiterverarbeitung überführt, wobei die Überführung von einem quer zur Strangförderbahn angetriebenen Querförderer ausgeführt wird. Hierbei wird besondere Aufmerksamkeit auf die Übergabe der strangförmigen Artikel vom Längsförderer auf den Querförderer gelegt, da Störungen des Förderflusses zu Beschädigungen oder gar Zerstörungen der überführten Strangabschnitte führen können.

Um die Übergabe der längsaxial geförderten Artikel in die Aufnahmen eines Querförderers zu gewährleisten, ist bekannt, die Artikel in Achsrichtung zu beschleunigen, so dass die Artikel vereinzelt werden. Weiterhin ist bekannt, dem Artikel vor dem Einstoß in die Aufnahmen des Querförderers eine Bewegungskomponente quer zu ihrer längsaxialen Bewegungsrichtung parallel zur Bewegung der Aufnahmen des Querförderers zu geben. Die verwendeten Querförderer werden auch als Einstoßtrommeln bezeichnet.

In DE 42 03 517 B4 ist eine Vorrichtung zum Überführen von Zigarettenabschnitten beschrieben, wobei ein Übergabeförderer als Querförderer zwei Trommeln mit unterschiedlich großem Durchmesser aufweist. Mit Hilfe von Übergabeköpfen eines Drehtellers an einer Zigarettendoppelstrangmaschine werden Zigarettenabschnitte von der Zweistrangzigarettenmaschine an den Übergabeförderer übergeben.

Aus DE 695 18 459 T2 (entspricht EP 0 682 881 B1) ist eine weitere Einstoßtrommel bekannt.

Zudem offenbart DE 19 08 199 A1 eine Ablegertrommel, wobei in den Aufnahmemulden mit Saugluft beaufschlagte Saugkanäle vorgesehen sind. Die Saugkanäle sind hierbei als pneumatische Bremsmittel für die in den Aufnahmemulden längsaxial geförderten Zigaretten vorgesehen.

Ferner offenbart DE 11 64 904 B eine Wendetrommel, wobei die Aufnahmen für die wendenden stabförmigen Artikel eine Ausnehmung bzw. Vertiefung aufweisen. In den Aufnahmemulden sind ein Saugluftkanal und ein Druckluftkanal vorgesehen.

Eine Aufgabe der vorliegenden Erfindung besteht darin, auf einer Einstoßtrommel aufgenommene, insbesondere defekte, stabförmige Artikel aus, vorzugsweise tiefen, Aufnahmemulden vom Trommelkörper der Einstoßtrommel auf effektive Weise zu entfernen.

Gelöst wird diese Aufgabe durch eine Einstoßtrommel der Tabak verarbeitenden Industrie mit Aufnahmemulden für stabförmige Artikel der Tabak verarbeitenden Industrie, insbesondere Filterstäbe und/oder Filterstücke und/oder segmentierte Produkte, wobei die Einstoßtrommel einen um eine Rotationsachse rotierbaren Trommelkörper aufweist, wobei der Trommelkörper eine Reihe von in Umfangsrichtung queraxial hintereinander angeordneten Aufnahmemulden aufweist, wobei die Aufnahmemulden jeweils einen Muldengrund aufweisen, wobei der Muldengrund der Aufnahmemulden jeweils von einem in Förderrichtung der Einstoßtrommel vorauseilenden Muldensteg und von einem in Förderrichtung der Einstoßtrommel nacheilenden Muldensteg begrenzt ist, wobei sich die Muldenstege parallel zur Rotationsachse der Einstoßtrommel wenigstens abschnittsweise erstrecken, wobei im Muldengrund der jeweiligen Aufnahmemulden und zwischen den Muldenstegen der jeweiligen Aufnahmemulde jeweils eine mit Druckluft beaufschlagbare Druckluftbohrung mit einer Austrittsöffnung in der Aufnahmemulde vorgesehen ist, wobei im Bereich der Austrittsöffnung der Druckluftbohrung eine Luftströmungsasymmetriezone vorgesehen ist, wobei in den Aufnahmemulden jeweils die Druckluftbohrung zwischen wenigstens zwei Saugluftbohrungen angeordnet ist.

Die Erfindung beruht auf dem Gedanken, dass, insbesondere defekte oder beschädigte, stabförmige Artikel, wie zum Beispiel Filterstäbe oder Multisegmentfilterstäbe, aus den tiefen Aufnahmemulden der Einstoßtrommel mittels eines Druckluftstoßes aus der Druckluftbohrung entfernt werden, wobei durch die Luftströmungsasymmetriezone im Bereich der Austrittsöffnung der Druckluftbohrung ein asymmetrisches Luftströmungsprofil am zu entfernenden oder auszublasenden stabförmigen Artikel erzeugt wird. Dadurch wird der entsprechende stabförmige Artikel aus dem Weiterverarbeitungsprozess ausgeschleust oder entfernt. Die Luftströmungsasymmetriezone ist vorgesehen oder eingerichtet, um bei Beaufschlagung der Druckluftbohrung mit Druckluft oder einem Druckluftstoß ein asymmetrisches Luftströmungsprofil am in der Aufnahmemulde aufgenommenen stabförmigen Artikel zu erzeugen. Dadurch ist es insbesondere möglich, dass bei Einstoßtrommeln mit hohen Muldenstegen, bei denen die Muldenstege die aufgenommenen stabförmigen Artikel überragen, die Wirkung des ansonsten wirksamen Bernoulli-Effekts am stabförmigen Artikel herabgesetzt oder vermieden wird. Insgesamt wird durch die Ausbildung der Luftströmungsasymmetriezone im Bereich der Druckluftbohrung das sichere Ausblasen von, insbesondere defekten, Filterstäben aus den tiefen Aufnahmemulden mit den hohen Muldenstegen gewährleistet. Vorzugsweise weist die Druckluftbohrung im Querschnitt eine runde, insbesondere kreisrunde, Form auf. Im Bereich der Aufnahmemulden weist die jeweilige Druckluftbohrung eine entsprechende Austrittsöffnung, vorzugweise mit einem runden, insbesondere kreisrunden, Querschnitt, in der Aufnahmemulde, auf.

Vorzugsweise ist die Luftströmungsasymmetriezone als einseitige Ausnehmung oder Ausfräsung an der Austrittsöffnung der Druckluftbohrung oder an einem der Muldenstege ausgebildet.

Gemäß einer bevorzugten Ausführungsform der Einstoßtrommel ist weiter vorgesehen, dass angrenzend, insbesondere unmittelbar angrenzend, an die Austrittsöffnung der Druckluftbohrung die Luftströmungsasymmetriezone vorgesehen ist. Dabei schließt unmittelbar an die Austrittsöffnung der Druckluftbohrung die Luftströmungsasymmetriezone an, durch die bei Beaufschlagung der Druckluftbohrung mit Druckluft am in der Aufnahmemulde angeordneten stabförmigen Artikel ein asymmetrisches Luftströmungsprofil erzeugt wird.

Des Weiteren zeichnet sich eine Weiterbildung der Einstoßtrommel dadurch aus, dass bezogen auf die Förderrichtung der Einstoßtrommel die Luftströmungsasymmetriezone der Austrittsöffnung der Druckluftbohrung vorauseilend oder nacheilend ausgebildet ist. Insbesondere ist die Luftströmungsasymmetriezone ausschließlich vorauseilend oder ausschließlich nacheilend im Bereich der oder angrenzend an die Austrittsöffnung der Druckluftbohrung ausgebildet.

Ferner ist vorteilhafterweise bei der Einstoßtrommel vorgesehen, dass die Muldenstege in Längsrichtung eine Ausnehmung aufweisen, so dass zwei Muldenstegabschnitte eines Muldenstegs ausgebildet sind, wobei die Ausnehmungen der Muldenstege in Umfangsrichtung des Trommelkörpers eine umlaufende Nut ausbilden.

Insbesondere ist gemäß einer bevorzugten Ausführung im Muldengrund der jeweiligen Aufnahmemulden und zwischen den, vorzugsweise parallel zur Rotationsachse der Einstoßtrommel sich erstreckenden, Muldenstegabschnitten der Muldenstege der jeweiligen Aufnahmemulde jeweils die mit Druckluft beaufschlagbare Druckluftbohrung mit der Austrittsöffnung in der Aufnahmemulde vorgesehen.

Gemäß einem bevorzugten Aspekt ist außerdem vorgesehen, dass die zwischen den Muldenstegabschnitten der Muldenstege ausgebildete umlaufende Nut eine, insbesondere gekrümmte, Nutgrundfläche aufweist, wobei insbesondere die Nutgrundfläche als Teilzylindermantelfläche ausgebildet ist. Vorzugsweise ist die Nut im Querschnitt U-förmig ausgebildet bezogen auf die längsaxiale Ausrichtung der Aufnahmemulden sowie entlang der Rotationsachse der Einstoßtrommel. Insbesondere ist die Nut in Umfangsrichtung der Einstoßtrommel mit einer Krümmung ausgebildet, wobei entlang der Umfangsrichtung der Einstoßtrommel zwischen zwei Nutabschnitten der Nut jeweils eine Aufnahmemulde vorgesehen oder angeordnet ist. Die, vorzugsweise im Querschnitt U-förmigen, Nutabschnitte zwischen zwei Aufnahmemulden weisen hierbei als Nutgrundfläche eine Teilzylindermantelfläche auf.

Dazu ist in einer vorteilhaften Weiterbildung der Einstoßtrommel vorgesehen, dass in Bezug auf die Rotationsachse der Einstoßtrommel der radiale Abstand der Nutgrundfläche der umlaufenden Nut der Einstoßtrommel zur Rotationsachse größer als der radiale Abstand des Muldengrunds zur Rotationsachse ist.

Außerdem zeichnet sich eine Ausgestaltung der Einstoßtrommel dadurch aus, dass die Nutgrundfläche der umlaufenden Nut zwischen zwei Aufnahmemulden und im Bereich der oder angrenzend an die Austrittsöffnung der Druckluftbohrung als Luftströmungsasymmetriezone mit einer Abschrägung ausgebildet ist. Durch die ausschließlich einseitige Abschrägung an der Austrittsöffnung der Druckluftbohrung wird eine Luftströmungsasymmetriezone ausgebildet, wodurch bei Beaufschlagung der Druckluftbohrung mit Druckluft oder einem Druckluftstoß der in der Aufnahmemulde befindliche oder angeordnete stabförmige Artikel leicht entfernt wird.

Erfindungsgemäß ist bei der Einstoßtrommel vorgesehen, dass in den Aufnahmemulden jeweils die Druckluftbohrung zwischen wenigstens zwei Saugluftbohrungen angeordnet ist. Die Saugluftbohrungen in den Aufnahmemulden sind mit Unterdruck beaufschlagbar, um die stabförmigen Artikel in der Aufnahmemulde mittels Unterdruck zu halten.

Dazu ist gemäß einer Weiterbildung vorgesehen, dass bezogen auf die Förderrichtung der Einstoßtrommel eine zur Druckluftbohrung benachbarte oder beide zur Druckluftbohrung benachbarten Saugluftbohrungen zwischen jeweils einem vorauseilenden Muldenstegabschnitt eines Muldenstegs und jeweils einem nacheilenden Muldenstegabschnitt des Muldenstegs angeordnet sind. Dadurch ist ausschließlich die Druckluftbohrung im Bereich der umlaufenden Nut in der Aufnahmemulde und zwischen einer vorauseilenden Nutgrundfläche und einer nacheilenden Nutgrundfläche, bezogen auf die Förderrichtung der Einstoßtrommel ausgebildet.

Um die stabförmigen Artikel aus der Aufnahmemulde der Einstoßtrommel zu entfernen, ist weiterhin gemäß einem Aspekt vorgesehen, dass an die Druckluftbohrung eine, vorzugsweise schaltbare, Druckluftquelle angeschlossen ist.

Bei einer Einstoßtrommel ist insbesondere vorgesehen, dass die stabförmigen Artikel entlang der Muldenstege in längsaxialer Richtung während der Rotation der Einstoßtrommel in den Aufnahmemulden verschiebbar sind oder verschoben werden.

Vorzugweise ist die Einstoßtrommel derart eingerichtet, dass nach Aufnahme von längsaxial geförderten stabförmigen Artikeln von einem Längsförderer in den jeweiligen Aufnahmemulden an einer Eintrittsseite des Trommelkörpers die stabförmigen Artikel längsaxial in den Aufnahmemulden zu der von der Eintrittsseite abgewandten Seite des Trommelkörpers bewegt werden und die stabförmigen Artikel in den Aufnahmemulden an der von der Eintrittsseite abgewandten Seite des Trommelkörpers in einer Reihe, insbesondere vor der Abgabe der stabförmigen Artikel an eine nachfolgende Fördertrommel, queraxial hintereinander in einer Reihe in den Aufnahmemulden jeweils angeordnet sind.

Ferner wird die Aufgabe gelöst durch eine Einrichtung zum Überführen von längsaxial geförderten, stabförmigen Artikeln der Tabak verarbeitenden Industrie, insbesondere Filterstäbe und/oder Filterstücke und/oder segmentierte Produkte, von einem die Artikel längsaxial fördernden Längsförderer auf eine die Artikel queraxial abfördernde Querfördereinrichtung, wobei die Querfördereinrichtung eine voranstehend beschriebene, erfindungsgemäße Einstoßtrommel aufweist. Zur Vermeidung von Wiederholungen wird auf die obigen Ausführungen ausdrücklich verwiesen.

Gelöst wird ferner die Aufgabe durch eine Maschine der Tabak verarbeitenden Industrie, insbesondere Filterherstellungsmaschine, Zigarettenstrangmaschine oder Filteransetzmaschine, mit einer voranstehend beschriebenen Einstoßtrommel. Hierzu wird auf die voranstehenden Ausführungen ebenfalls ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine perspektivische Ansicht eines Trommelkörpers einer Einstoßtrommel,
- Fig. 2: schematisch eine perspektivische Ansicht der Oberfläche des Trommelkörpers im Ausschnitt und
- Fig. 3: schematisch eine Detailansicht einer Druckluftbohrung des Trommelkörpers.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

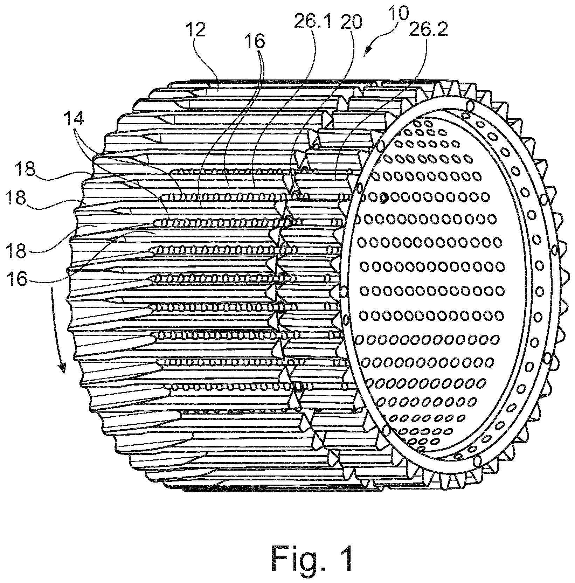

Figur 1 zeigt schematisch eine perspektivische Ansicht eines Trommelkörpers 12 einer schematisch bezeichneten Einstoßtrommel 10. Die Einstoßtrommel 10 ist als Fördertrommel zum queraxialen Fördern von stabförmigen Artikeln, wie z.B. Filterstäben oder dergleichen, ausgebildet.

Der Trommelkörper 12 weist auf seiner Außenseite in regelmäßigen Abständen in Umfangsrichtung Aufnahmemulden 14 auf, die jeweils von hohen Muldenstegen 16 begrenzt sind. Die Muldenstege 16 und die Aufnahmemulden 14 verlaufen parallel zur Rotationsachse der Einstoßtrommel 10 bzw. der Rotationsachse des Trommelkörpers 12. Der Trommelkörper 12 wird im Betrieb der Einstoßtrommel 10 gemäß der in Fig. 1 eingezeichneten Pfeilrichtung gedreht. Die Aufnahmemulden 14 weisen an einer seitlichen Eintrittsseite einen verbreiterten Einmündungsbereich 18 auf, so dass an der Eintrittsseite bzw. am Einmündungsbereich 18 an einer vorbestimmten Übergabestelle von einem (hier nicht dargestellten) längsaxial fördernden Längsförderer stabförmige Artikel in die Aufnahmemulden 14 eingebracht werden. Während der Rotation des Trommelkörpers 12 werden die aufgenommenen stabförmigen Artikel in den Aufnahmemulden 14 längsaxial entlang der Rotationsachse des Trommelkörpers zu der gegenüber dem Einmündungsbereich 18 abgewandten Seite gefördert.

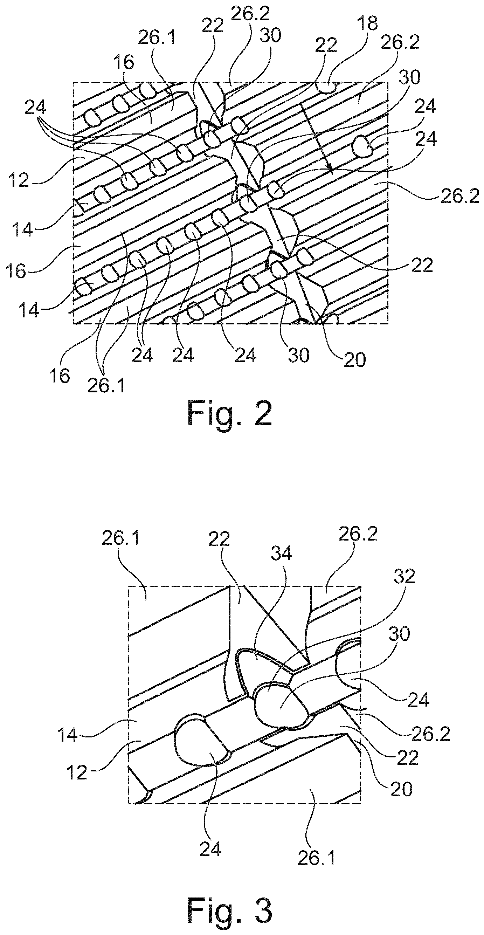

In Fig. 2 ist eine perspektivische Ansicht des Trommelkörpers 12 in einem Ausschnitt gezeigt. Darüber hinaus zeigt Fig. 3 eine Detailansicht einer Aufnahmemulde 14 des Trommelkörpers 12.

Die Muldenstege 16 weisen im Bereich der vom Einmündungsbereich 18 abgewandten Seiten jeweils eine Ausnehmung auf, wodurch Muldenstegabschnitte 26.1, 26.2 der Muldenstege 16 jeweils entstehen. Durch die Ausnehmung zwischen den in axialer Richtung beabstandeten Muldenstegabschnitten 26.1, 26.2 wird eine umlaufende Nut 20 in Umfangsrichtung gebildet. Die umlaufende Nut 20 ist hierbei U-förmig im Querschnitt ausgebildet und weist zwischen den Aufnahmemulden 14 in Umfangsrichtung abschnittsweise eine Nutgrundfläche 22 auf.

In den Aufnahmemulden 14 ist im Bereich der umlaufenden Nut 20 eine Druckluftbohrung 30 ausgebildet, die mittels einer (hier nicht dargestellten) Druckluftquelle verbunden ist, so dass in einem vorbestimmten Förderbereich der Einstoßtrommel 10 ein Druckluftstoß mittels der Druckluftquelle erzeugt wird, so dass die Druckluftbohrung 30 mit Druckluft beaufschlagt ist. Die Druckluftbohrungen 30 der Aufnahmemulden 14 sind jeweils bezogen auf die Förderrichtung des Trommelkörpers 12 zwischen einer vorauseilenden Nutgrundfläche 22 und einer nacheilenden Nutgrundfläche 22 angeordnet.

Darüber hinaus weisen die Aufnahmemulden 14 in axialer Erstreckung, d.h. parallel zur Rotationsachse der Einstoßtrommel, Saugluftbohrungen 24 auf. Durch das Anlegen von Unterdruck an die Saugluftbohrungen 24 werden die in den Aufnahmemulden 14 längsaxial geförderten stabförmigen Artikel, wie zum Beispiel Filterstäbe, in den Aufnahmemulden 14 jeweils gehalten.

Zwischen zwei in Umfangsrichtung hintereinander angeordneten Nutgrundflächen 22 (vgl. Fig. 3) der umlaufenden Nut 20 ist die Druckluftbohrung 30 ausgebildet, die am Muldengrund der Aufnahmemulden 14 eine Austrittsöffnung 32 aufweist. Die Druckluftbohrung 30 ist, wie aus Fig. 3 ersichtlich, in axialer Richtung zwischen zwei Saugluftbohrungen 24 angeordnet, wobei die Saugluftbohrungen 24 zwischen zwei Muldenstegen 26.1 bzw. 26.2 angeordnet sind.

Nach Positionierung eines stabförmigen Artikels in den Aufnahmemulden 14 auf der Seite, die von der Eintrittsseite der stabförmigen Artikel in die Aufnahmemulden 14 abgewandt ist, sind die jeweiligen stabförmigen Artikel im Bereich der in Fig. 3 dargestellten Saugluftbohrungen 24 angeordnet, so dass diese Saugluftbohrungen 24 zusammen mit der Druckluftbohrung 30 von den stabförmigen Artikeln jeweils abgedeckt sind.

Bezogen auf die Förderrichtung der Einstoßtrommel 10 ist an der Druckluftbohrung 30 mit ihrer Austrittsöffnung 32 in der nacheilenden Nutgrundfläche 22 eine Ausnehmung 34 ausgebildet, die zur Nutgrundfläche 22 geneigt ist. Insbesondere ist die Ausnehmung 34 als Ausfräsung oder dergleichen im Bereich der Austrittsöffnung 32 der Druckluftbohrung 30 ausgebildet. Die Ausnehmung 34 ist hierbei bezogen auf die Förderrichtung der Einstoßtrommel einseitig auf der nacheilenden Nutgrundfläche 22 ausgebildet.

Die Ausnehmung 34 bildet hierbei eine Luftströmungsasymmetriezone aus, wodurch bei Beaufschlagung der Druckluftbohrung 30 mit Druckluft an dem stabförmigen Artikel in der Aufnahmemulde 16 ein asymmetrisches Luftströmungsprofil ausgebildet wird, wodurch der stabförmige Artikel aus der Aufnahmemulde 14 sicher ausgeblasen bzw. entfernt wird.

### Bezugszeichenliste

- 10: Einstoßtrommel
- 12: Trommelkörper
- 14: Aufnahmemulden
- 16: Muldensteg
- 18: Einmündungsbereich
- 20: Nut
- 22: Nutgrundfläche
- 24: Saugluftbohrung
- 26.1, 26.2: Muldenstegabschnitt
- 30: Druckluftbohrung
- 32: Austrittsöffnung
- 34: Ausnehmung

## Patentansprüche

1. Einstoßtrommel (10) der Tabak verarbeitenden Industrie mit Aufnahmemulden (14) für stabförmige Artikel der Tabak verarbeitenden Industrie, insbesondere Filterstäbe und/oder Filterstücke und/oder segmentierte Produkte, wobei die Einstoßtrommel (10) einen um eine Rotationsachse rotierbaren Trommelkörper (12) aufweist, wobei der Trommelkörper (12) eine Reihe von in Umfangsrichtung queraxial hintereinander angeordneten Aufnahmemulden (14) aufweist, wobei die Aufnahmemulden (14) jeweils einen Muldengrund aufweisen, wobei der Muldengrund der Aufnahmemulden (14) jeweils von einem in Förderrichtung der Einstoßtrommel (10) vorauseilenden Muldensteg (16) und von einem in Förderrichtung der Einstoßtrommel (10) nacheilenden Muldensteg (16) begrenzt ist, wobei sich die Muldenstege (16) parallel zur Rotationsachse der Einstoßtrommel (10) wenigstens abschnittsweise erstrecken, wobei im Muldengrund der jeweiligen Aufnahmemulden (14) und zwischen den Muldenstegen (16) der jeweiligen Aufnahmemulde (14) jeweils eine mit Druckluft beaufschlagbare Druckluftbohrung (30) mit einer Austrittsöffnung (32) in der Aufnahmemulde (14) vorgesehen ist, wobei im Bereich der Austrittsöffnung (32) der Druckluftbohrung (30) eine Luftströmungsasymmetriezone (34) vorgesehen ist, **dadurch gekennzeichnet, dass** in den Aufnahmemulden (14) jeweils die Druckluftbohrung (30) zwischen wenigstens zwei Saugluftbohrungen (24) angeordnet ist.

2. Einstoßtrommel (10) nach Anspruch 1, **dadurch gekennzeichnet, dass** angrenzend an die Austrittsöffnung (32) der Druckluftbohrung (30) die Luftströmungsasymmetriezone vorgesehen ist.

3. Einstoßtrommel (10) nach Anspruch 1 oder 2, **dadurch gekennzeichnet, dass** bezogen auf die Förderrichtung der Einstoßtrommel (10) die Luftströmungsasymmetriezone der Austrittsöffnung (32) der Druckluftbohrung (30) vorauseilend oder nacheilend ausgebildet ist.

4. Einstoßtrommel (10) nach einem der Ansprüche 1 bis 3, **dadurch gekennzeichnet, dass** die Muldenstege (16) in Längsrichtung eine Ausnehmung aufweisen, so dass zwei Muldenstegabschnitte (26.1, 26.2) eines Muldenstegs (16) ausgebildet sind, wobei die Ausnehmungen der Muldenstege (16) in Umfangsrichtung des Trommelkörpers (12) eine umlaufende Nut (20) ausbilden.

5. Einstoßtrommel (10) nach Anspruch 4, **dadurch gekennzeichnet, dass** im Muldengrund der jeweiligen Aufnahmemulden (14) und zwischen den, vorzugsweise parallel zur Rotationsachse der Einstoßtrommel (10) sich erstreckenden, Muldenstegabschnitten (26.1, 26.2) der Muldenstege (16) der jeweiligen Aufnahmemulde (14) jeweils die mit Druckluft beaufschlagbare Druckluftbohrung (30) mit der Austrittsöffnung (32) in der Aufnahmemulde (14) vorgesehen ist.

6. Einstoßtrommel (10) nach Anspruch 4 oder 5, **dadurch gekennzeichnet, dass** die zwischen den Muldenstegabschnitten (26.1, 26.2) der Muldenstege (16) ausgebildete umlaufende Nut (20) eine, insbesondere gekrümmte, Nutgrundfläche aufweist, wobei insbesondere die Nutgrundfläche als Teilzylindermantelfläche ausgebildet ist.

7. Einstoßtrommel (10) nach Anspruch 6, **dadurch gekennzeichnet, dass** in Bezug auf die Rotationsachse der Einstoßtrommel (10) der radiale Abstand der Nutgrundfläche (22) der umlaufenden Nut (20) der Einstoßtrommel (10) zur Rotationsachse größer als der radiale Abstand des Muldengrunds zur Rotationsachse ist.

8. Einstoßtrommel (10) nach Anspruch 6 oder 7, **dadurch gekennzeichnet, dass** die Nutgrundfläche (22) der umlaufenden Nut (20) zwischen zwei Aufnahmemulden (14) und im Bereich der oder angrenzend an die Austrittsöffnung (32) der Druckluftbohrung (30) als Luftströmungsasymmetriezone mit einer Abschrägung ausgebildet ist.

9. Einstoßtrommel (10) nach einem der Ansprüche 1 bis 8, **dadurch gekennzeichnet, dass** bezogen auf die Förderrichtung der Einstoßtrommel (10) eine zur Druckluftbohrung (30) benachbarte oder beide zur Druckluftbohrung (30) benachbarten Saugluftbohrungen (24) zwischen jeweils einem vorauseilenden Muldenstegabschnitt (26.1, 26.2) eines Muldenstegs (16) und jeweils einem nacheilenden Muldenstegabschnitt (26.1, 26.2) des Muldenstegs (16) angeordnet sind.

10. Einstoßtrommel (10) nach einem der Ansprüche 1 bis 9, **dadurch gekennzeichnet, dass** an die Druckluftbohrung (30) eine, vorzugsweise schaltbare, Druckluftquelle angeschlossen ist.

11. Einrichtung zum Überführen von längsaxial geförderten, stabförmigen Artikeln der Tabak verarbeitenden Industrie, insbesondere Filterstäbe und/oder Filterstücke und/oder segmentierte Produkte, von einem die Artikel längsaxial fördernden Längsförderer auf eine die Artikel queraxial abfördernde Querfördereinrichtung, wobei die Querfördereinrichtung eine Einstoßtrommel (10) nach einem der Ansprüche 1 bis 10 aufweist.

12. Maschine der Tabak verarbeitenden Industrie, insbesondere Filterherstellungsmaschine, Zigarettenstrangmaschine oder Filteransetzmaschine, mit einer Einstoßtrommel (10) nach einem der Ansprüche 1 bis 10.

## Claims

1. A fluted drum (10) for the tobacco processing industry, having receiving troughs (14) for rod-shaped articles for the tobacco processing industry, in particular filter rods and/or filter pieces and/or segmented products, wherein the fluted drum (10) has a drum body (12) which can be rotated about an axis of rotation, wherein the drum body (12) has a series of receiving troughs (14) arranged behind one another transversely axially in the circumferential direction, wherein the receiving troughs (14) each have a groove bottom, wherein the groove bottom of the receiving troughs (14) is delimited in each case by a leading aligning groove segment (16) in the conveying direction of the fluted drum (10) and by a trailing aligning groove segment (16) in the conveying direction of the fluted drum (10), wherein the aligning groove segments (16) extend parallel to the axis of rotation of the fluted drum (10) at least in sections, wherein a compressed air hole (30) which can be supplied with compressed air and which has an outlet opening (32) in the receiving trough (14) is provided in each case in the groove bottom of the respective receiving troughs (14) and between the aligning groove segments (16) of the respective receiving trough (14), wherein an air flow asymmetry zone (34) is provided in the region of the outlet opening (32) of the compressed air hole (30), **characterized in that** the compressed air hole (30) is arranged in each case between at least two suction air holes (24) in the receiving troughs (14).

2. The fluted drum (10) according to claim 1, **characterized in that** the air flow asymmetry zone is provided adjoining the outlet opening (32) of the compressed air hole (30).

3. The fluted drum (10) according to claim 1 or 2, **characterized in that** the air flow asymmetry zone of the outlet opening (32) of the compressed air hole (30) is configured in a leading or trailing manner based on the conveying direction of the fluted drum (10).

4. The fluted drum (10) according to any one of claims 1 to 3, **characterized in that** the aligning groove segments (16) have a recess in the longitudinal direction so that two aligning groove segment portions (26.1, 26.2) of an aligning groove segment (16) are configured, wherein the recesses of the aligning groove segments (16) configure a circumferential groove (20) in the circumferential direction of the drum body (12).

5. The fluted drum (10) according to claim 4, **characterized in that** in the groove bottom of the respective receiving troughs (14) and between the aligning groove segment portions (26.1, 26.2), which preferably extend parallel to the axis of rotation of the fluted drum (10), of the aligning groove segments (16) of the respective receiving trough (14), the compressed air hole (30) which can be supplied with compressed air is provided in each case with the outlet opening (32) in the receiving trough (14).

6. The fluted drum (10) according to claim 4 or 5, **characterized in that** the circumferential groove (20) configured between the aligning groove segment portions (26.1, 26.2) of the aligning groove segments (16) has a groove base which is in particular curved, wherein the groove base is in particular configured as a partial cylinder shell surface.

7. The fluted drum (10) according to claim 6, **characterized in that**, with respect to the axis of rotation of the fluted drum (10), the radial distance of the groove base (22) of the circumferential groove (20) of the fluted drum (10) from the axis of rotation is greater than the radial distance of the groove bottom from the axis of rotation.

8. The fluted drum (10) according to claim 6 or 7, **characterized in that** the groove base (22) of the circumferential groove (20) is configured as an air flow asymmetry zone having a bevel between two receiving troughs (14) and in the region of, or adjacent to, the outlet opening (32) of the compressed air hole (30).

9. The fluted drum (10) according to any one of claims 1 to 8, **characterized in that**, based on the conveying direction of the fluted drum (10), a suction air hole (24) adjacent to the compressed air hole (30) or both suction air holes (24) adjacent to the compressed air hole (30) is/are arranged between one leading aligning groove segment portion (26.1, 26.2) each of an aligning groove segment (16) and one trailing aligning groove segment portion (26.1, 26.2) each of the aligning groove segment (16).

10. The fluted drum (10) according to any one of claims 1 to 9, **characterized in that** a compressed air source, which can preferably be switched, is connected to the compressed air hole (30).

11. A device for transferring rod-shaped articles for the tobacco processing industry, which are conveyed longitudinally axially, in particular filter rods and/or filter pieces and/or segmented products, from a longitudinal conveyor conveying the articles longitudinally axially to a transverse conveying device conveying the articles away transversely axially, wherein the transverse conveying device has a fluted drum (10) according to any one of claims 1 to 10.

12. A machine for the tobacco processing industry, in particular a filter production machine, an endless cigarette rod machine or a filter assembling machine, having a fluted drum (10) according to any one of claims 1 to 10.

## Revendications

1. Tambour d'insertion (10) de l'industrie de transformation du tabac avec des augets de réception (14) pour des articles en forme de tige de l'industrie de transformation du tabac, en particulier des tiges de filtre et/ou des morceaux de filtre et/ou des produits segmentés, le tambour d'insertion (10) présentant un corps de tambour (12) apte à tourner autour d'un axe de rotation, le corps de tambour (12) présente une série d'augets de réception (14) agencés circonférentiellement les uns derrière les autres dans la direction transversale, les augets de réception (14) présentant chacun un fond d'auget, le fond d'auget des augets de réception (14) étant délimité par une barrette d'auget (16) située en amont dans la direction de transport du tambour d'insertion (10) et par une barrette d'auget (16) située en aval dans la direction de transport du tambour d'insertion (10), les barrettes d'augets (16) s'étendant au moins partiellement parallèlement à l'axe de rotation du tambour d'insertion (10), un alésage (30) pour de l'air comprimé étant apte à être alimenté en air comprimé avec une ouverture de sortie (32) étant prévu dans l'auget de réception (14) respectif dans le fond d'auget des augets de réception (14) respectifs et entre les barrettes d'augets (16) de l'auget de réception (14) respectif, une zone (34) d'asymétrie d'écoulement d'air étant prévue dans la zone de l'ouverture de sortie (32) de l'alésage (30) pour de l'air comprimé, **caractérisé en ce que**, dans les augets de réception (14), l'alésage (30) pour de l'air comprimé est agencé entre au moins deux alésages (24) pour de l'air d'aspiration.

2. Tambour d'insertion (10) selon la revendication 1, **caractérisé en ce que** la zone d'asymétrie de l'écoulement d'air est prévue à proximité de l'ouverture de sortie (32) de l'alésage (30) pour de l'air comprimé.

3. Tambour d'insertion (10) selon la revendication 1 ou 2, **caractérisé en ce que**, par rapport à la direction de transport du tambour d'insertion (10), la zone d'asymétrie de l'écoulement d'air de l'ouverture de sortie (32) de l'alésage (30) pour de l'air comprimé est réalisée en amont ou en aval.

4. Tambour d'insertion (10) selon l'une des revendications 1 à 3, **caractérisé en ce que** les barrettes d'augets (16) présentent un évidement dans la direction longitudinale, de sorte que deux sections (26.1, 26.2) de barrettes d'augets d'une barrette d'auget (16) sont formées, les évidements des barrettes d'augets (16) formant une rainure circonférentielle (20) dans la direction circonférentielle du corps de tambour (12).

5. Tambour d'insertion (10) selon la revendication 4, **caractérisé en ce que**, dans le fond des augets de réception respectifs (14) et entre les sections (26.1, 26.2) de barrettes d'augets, s'étendant de préférence parallèlement à l'axe de rotation du tambour d'insertion (10), des barrettes (16) de l'auget de réception (14) respectif, l'alésage (30) pour de l'air comprimé apte à être alimenté en air comprimé est prévu avec l'ouverture de sortie (32) dans l'auget de réception (14).

6. Tambour d'insertion (10) selon la revendication 4 ou 5, **caractérisé en ce que** la rainure circonférentielle (20) formée entre les sections (26.1, 26.2) de barrettes d'augets des barrettes d'augets (16) présente une surface de base de rainure, en particulier incurvée, la surface de base de rainure étant en particulier réalisée sous forme de surface d'enveloppe de cylindre partiel.

7. Tambour d'insertion (10) selon la revendication 6, **caractérisé en ce que**, par rapport à l'axe de rotation du tambour d'insertion (10), la distance radiale entre la surface de base (22) de la rainure circonférentielle (20) du tambour d'insertion (10) et l'axe de rotation est supérieure à la distance radiale entre le fond de l'auget et l'axe de rotation.

8. Tambour d'insertion (10) selon la revendication 6 ou 7, **caractérisé en ce que** la surface de base (22) de la rainure circonférentielle (20) entre deux augets de réception (14) et dans la zone de l'ouverture de sortie (32) de l'alésage (30) pour de l'air comprimé, ou à proximité de celle-ci, est conçue sous la forme d'une zone d'asymétrie de flux d'air avec un chanfrein.

9. Tambour d'insertion (10) selon l'une des revendications 1 à 8, **caractérisé en ce que**, par rapport à la direction de transport du tambour d'insertion (10), un alésage (24) pour de l'air d'aspiration voisin de l'alésage (30) pour de l'air comprimé, ou les deux alésages pour de l'air d'aspiration voisins de l'alésage (30) pour de l'air comprimé, sont aménagés entre respectivement une section (26.1, 26.2) de barrette d'auget d'une barrette d'auget (16) et respectivement une section (26.1, 26.2) de barrette d'auget située en aval de la barrette d'auget (16).

10. Tambour d'insertion (10) selon l'une des revendications 1 à 9, **caractérisé en ce qu'**une source d'air comprimé, de préférence commutable, est raccordée à l'alésage (30) pour de l'air comprimé.

11. Dispositif pour transférer des articles en forme de tige de l'industrie de transformation du tabac, transportés dans la direction de l'axe longitudinal, en particulier des tiges de filtre et/ou des morceaux de filtre et/ou des produits segmentés, d'un convoyeur longitudinal transportant les articles dans la direction de l'axe longitudinal à un dispositif de convoyage transversal évacuant les articles dans la direction de l'axe transversal, le dispositif de convoyage transversal présentant un tambour d'insertion (10) selon l'une des revendications 1 à 10.

12. Machine de l'industrie de transformation du tabac, en particulier machine de fabrication de filtres, machine de fabrication de bâtonnets de cigarettes ou machine de pose de filtres, comprenant un tambour d'insertion (10) selon l'une des revendications 1 à 10.
